Europäisches Patentamt

European Patent Office

Office européen des brevets

(19)

(11) Numéro de publication: **0 088 657 B1**

(12) **FASCICULE DE BREVET EUROPEEN**

(45) Date de publication du fascicule du brevet:
23.04.86

(51) Int. Cl.⁴: **B 01 D 45/14**, B 04 B 5/12

(21) Numéro de dépôt: 83400342.8

(22) Date de dépôt: 18.02.83

(54) **Appareil perfectionné pour la séparation centrifuge d'un mélange comprenant au moins une phase gazeuse.**

(30) Priorité: 03.03.82 FR 8203532

(43) Date de publication de la demande:
14.09.83 Bulletin 83/37

(45) Mention de la délivrance du brevet:
23.04.86 Bulletin 86/17

(84) Etats contractants désignés:
AT BE CH DE GB IT LI LU NL SE

(56) Documents cités:
FR - A - 556 835
FR - A - 1 313 940
FR - A - 2 267 153
GB - A - 2 061 136

(73) Titulaire: **Saget, Pierre Laurent, 36, avenue de la Grande Armée, F-75017 Paris (FR)**

(72) Inventeur: **Saget, Pierre Laurent, 36, avenue de la Grande Armée, F-75017 Paris (FR)**

(74) Mandataire: **Caunet, Jean et al, Cabinet BEAU DE LOMENIE 55, rue d'Amsterdam, F-75008 Paris (FR)**

## Description

La présente invention concerne des perfectionnements apportés à un appareil pour la séparation centrifuge d'un mélange comprenant au moins une phase gazeuse, appareil faisant l'objet de la demande de brevet français n° 2468410 (ou GB-A-2061136).

Cet appareil comporte, dans une enceinte fixe, un équipage tournant constitué par un rotor de traitement à disques ajourés décalés angulairement de l'un à l'autre, en amont par un distributeur rotatif et en aval par un ventilateur avec interposition éventuelle d'un redresseur rotatif. Le mélange à traiter s'écoule de façon laminaire à travers les ajourages des disques suivant des veines hélicoïdales vives séparées par des lames hélicoïdales mortes, les lames tournant à la même vitesse que le rotor, tandis que les veines vives tournent beaucoup plus vite. La phase non gazeuse à séparer s'échappe sous l'effet du champ centrifuge extrêmement intense des veines vives et se trouve prise en charge par les lames mortes où règne toujours un champ centrifuge, cependant moins intense. Sous l'effet de celui-ci, cette phase plus dense migre vers le périphérie et se trouve piégée par un empilage de déflecteurs tronconiques divergeant vers l'amont et solidaires de l'enceinte fixe.

La pression en amont de chaque disque est supérieure à la pression en aval, par suite de la perte de charge et de la détente au passage du fluide gazeux à travers les ajourages du disque considéré. Entre celui-ci et le déflecteur correspondant, un jeu fonctionnel est ménagé et laisse apparaître une fente annulaire à travers laquelle une fuite tend à se produire de l'amont vers l'aval, en raison justement de la faible chute de pression précitée. D'une manière analogue, un jeu est ménagé entre le déflecteur considéré et la paroi de l'enceinte pour l'évacuation vers l'amont de la phase séparée la plus dense, une fuite de phase gazeuse tendant également à se produire à travers cette deuxième fente annulaire, de l'amont vers l'aval.

Ces fuites nuisent au rendement de la séparation, car la phase gazeuse se charge évidemment au passage, en faible quantité certes mais en quantité incompatible avec la qualité requise, de la phase la plus dense amenée par des lames mortes. D'autre part, si cette phase la plus dense est un liquide, l'écoulement de celui-ci vers l'amont le long de la paroi de l'enceinte est contrarié par la fuite gazeuse vers l'aval et le liquide tend à séjourner dans les déflecteurs; des phénomènes de redispersion de liquide peuvent alors se produire.

Le problème est donc d'empêcher que des particules de la phase la plus dense soient entraînées par des fuites gazeuses vers l'aval.

Dans la demande d'addition française n° 2267153, des moyens sont mis en oeuvre pour empêcher toute fuite gazeuse à travers la fente existant entre les disques et les déflecteurs. Ces moyens se comportent comme des joints labyrinthes s'opposant à toute fuite de phase gazeuse vers l'aval. Ils peuvent aussi coopérer avec un moyen formant sas, qui laisse la phase la plus dense s'acheminer vers l'enceinte fixe et empêche la phase gazeuse de suivre.

La présente invention propre des moyens différents en vue d'obtenir des performances exceptionnelles et un rendement de séparation proche de la perfection.

Dans ce but et conformément à l'invention, l'appareil comporte des moyens annihilant partiellement au moins des fuites vers l'aval à travers la fente annulaire nécessairement ménagée entre les disques et la partie fixe pour permettre la rotation de l'équipage tournant et consistant en de petites pales axiales formées à la périphérie de l'un au moins quelconque des éléments constitués par les disques et la partie fixe de l'enceinte pour engendrer un rideau axial de fluide s'écoulant à contre-courant vers l'amont dans la fente annulaire précitée, le rideau imposant alors que le mélange soit traité en totalité et que la phase séparée la plus dense s'achemine vers l'amont le long de la paroi de l'enceinte.

La partie fixe précitée de l'enceinte étant constituée par la paroi même de cette enceinte, les petites pales peuvent être formées à la périphérie d'une plage annulaire des disques exemptes d'ajourages sur une largeur suffisante et orientées pour diriger le rideau de balayage vers l'amont.

La partie fixe précitée de l'enceinte étant constituée par un empilage de déflecteurs tronconiques dont le bord intérieur est situé rigoureusement en regard des disques, les petites pales peuvent être formées sur le bord des disques ou sur ce bord des déflecteurs, bord qui peut être tronconique ou annulaire et plat.

Le moyen annihilant partiellement au moins les fuites peut egalement consister en des ailettes radiales ou incidentes, droites ou incurvées, faisant saillie sur la face amont de la plage annulaire périphérique exemptes d'ajourages d'au moins le dernier disque aval du rotor, pour engendrer un rideau axial de fluide s'écoulant vers la paroi de l'enceinte et les fentes annulaires sont barrées, au-dessus du dernier disque aval, par une collerette solidaire de la paroi de l'enceinte, cette collerette formant labyrinthe et favorisant la déviation du rideau de balayage radial en un rideau de balayage axial le long de cette paroi.

Divers autres caractéristiques et avantages de l'invention ressortent d'ailleurs de la description détaillée qui suit.

Des formes de réalisation de l'objet de l'invention sont représentées, à titre d'exemples non limitatifs, sur le dessin annexé.

Sur ce dessin:

Fig. 1 est une perspective montrant l'appareil centrifuge auquel les perfectionnements de l'invention sont appliqués;

Figs. 2 à 6 sont des coupes schématiques d'un disque illustrant deux formes de réalisation et des variantes susceptibles d'être adoptées pour ces perfectionnements;

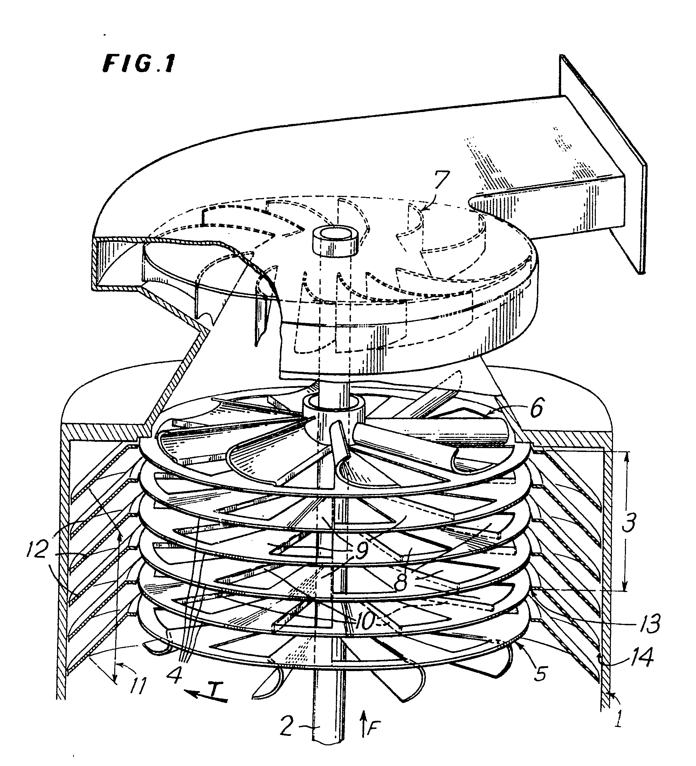

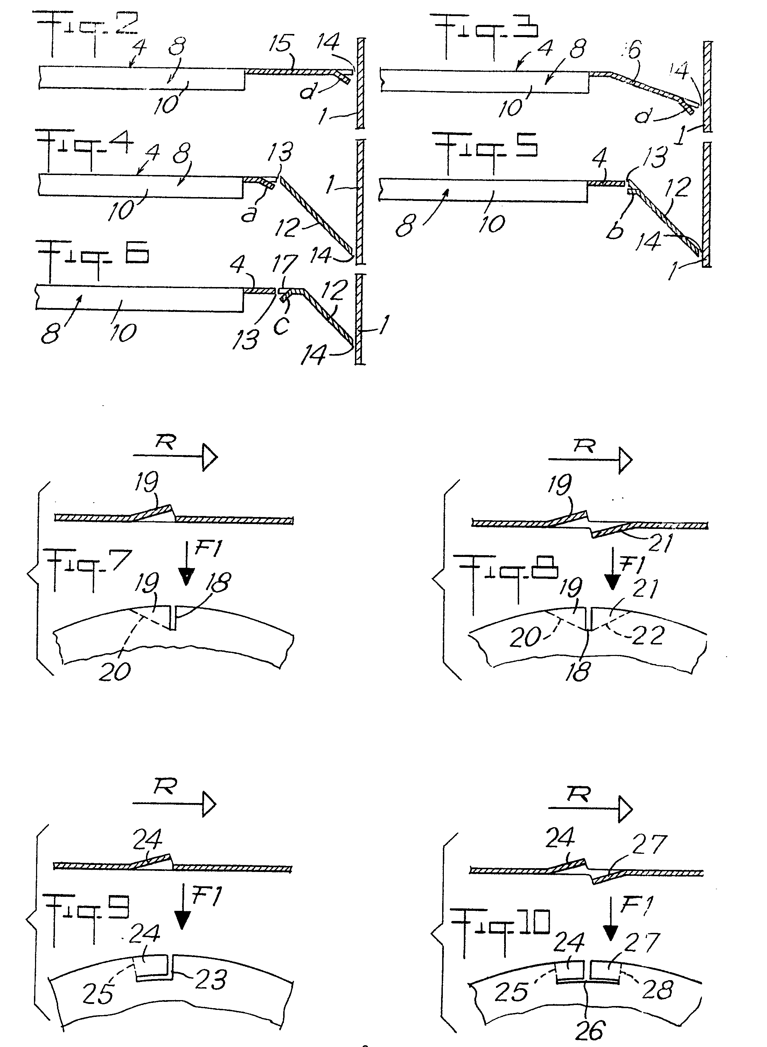

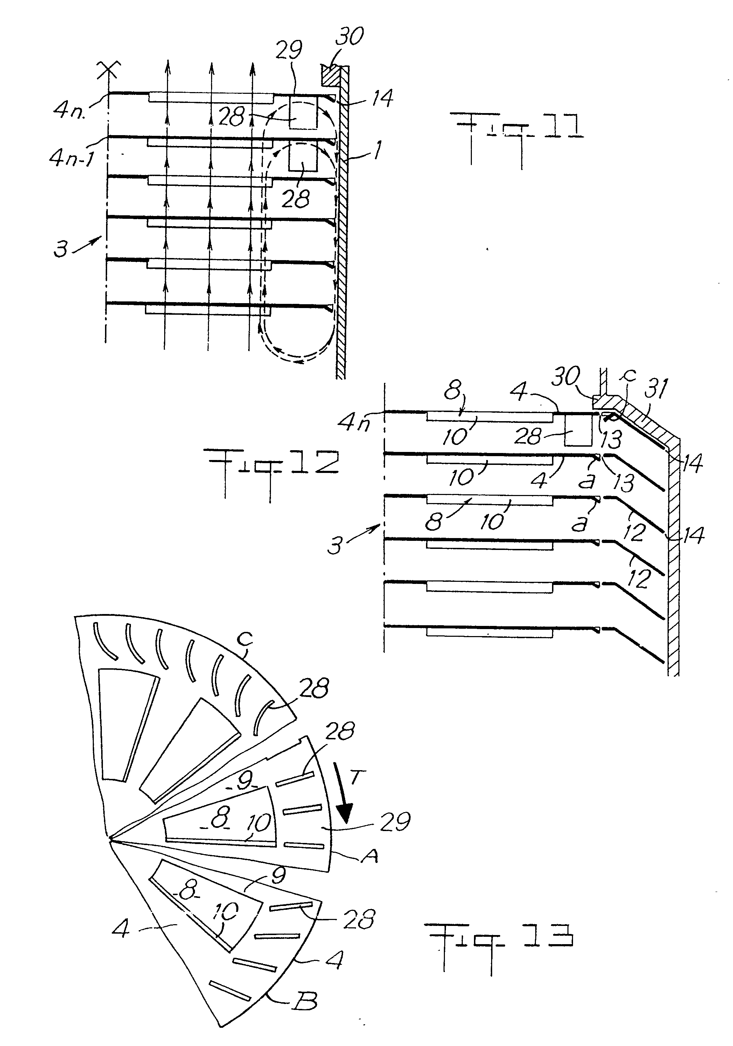

Figs. 7 à 10 font ressortir en plan et en coupe, plusieurs modes d'exécution des petites pales

mises en œuvres selon les figures 3 à 6;

Figs. 11 et 12 sont des demicoupes axiales de l'appareil illustrant une troisième forme de réalisation susceptible également d'être adoptée pour les perfectionnements précitées;

Fig. 13 est en vue en plan partielle d'un disque montrant plusieurs modes d'exécution des ailettes selon les figures 11 et 12.

Ainsi que sela apparaît clairement sur la figure 1, l'appareil avant perfectionnement comporte une enceinte fixe 1 dans laquelle est disposé un équipage tournant mû en rotation par un dispositif d'entraînement tel qu'un moteur électrique.

Cet équipage comporte, calés sur un arbre menant commun 2:

un rotor de traitement 3 constitué par un empilage de disques ajourés 4;

un distributeur rotatif 5 situé en amont du rotor si l'on considère le sens F d'écoulement axial du mélange à traiter;

éventuellement, un redresseur rotatif 6 disposé en aval du rotor

et un ventilateur 7 calé sur l'arbre 1 en aval du redresseur 6.

Les disques 4 du rotor 2 délimitent des ajourages 8 séparés par des parties pleines 9 présentant en saillie des rebords 10 dits postérieurs si l'on considère le sens T de rotation. Les disques sont écartés et décalés angulairement les uns des autres, de telle façon que la pente de l'écoulement hélicoïdal des veines vives du mélange à travers les ajourages 8 se trouve déterminée; cet écoulement à plus grande vitesse tangentielle que le rotor est dû à la chute de pression amont engendrée par le ventilateur 7 et à la transformation de celle-ci par le distributeur 5 en une vitesse hélicoïdale. Les veines vives s'écoulent plus vite relativement à des lames mortes intercalaires piégées dans le rotor par les parties pleines 9 et leurs rebords 10.

L'enceinte 1 est solidaire d'un empilage 11 de déflecteurs tronconiques 12 qui piègent la phase la plus dense séparée s'échappant des veines vives, soit directement, soit par l'intermédiaire des lames mortes sous l'effet des champs centrifuges auxquels lesdites veines et lames sont soumises.

Ainsi que cela est indiqué dans ce qui précède, du jeu est prévu:

– entre les disques 4 et les déflecteurs 12 pour permettre la rotation de l'équipage tournant, ce jeu étant réduit au minimum en disposant ces disques et ces déflecteurs en prolongement très précis les uns des autres;

– entre les déflecteurs 12 et la paroi de l'enceinte 1 pour permettre l'évacuation contre celle-ci vers l'amont de la phase séparée la plus dense.

Ces jeux font donc apparaître deux fentes annulaires 13 et 14 à travers lesquelles des fuites se produisent vers l'aval en entraînement de cette phase la plus dense, en faible quantité d'ailleurs. Il s'agit de mettre en oeuvre des moyens s'opposant à de telles fuites et permettant par conséquent de parvenir à une séparation pratiquement parfaite.

Suivant une première forme de réalisation schématisée sur les figs. 4 à 6, l'empilage de déflecteurs tronconiques 12 subsiste et les fentes annulaires 13, 14 également. De petites pales dites axiales sont prévus pour engendrer à travers les fentes alignées 13 un rideau axial de fluide s'écoulant à contrecourant vers l'amont. Ainsi, le rideau axial s'oppose à ce qu'une fuite puisse se produire à travers lesdites fentes 13; il forme en outre un écran relativement difficile à franchir pour la phase la moins dense, alors que la phase la plus dense lancée par le champ centrifuge le traverse relativement facilement; d'autre part, ce rideau favorise en l'entraînant, le cheminement vers l'amont de la phase la plus dense le long de la paroi de l'enceinte.

Lorsqu'il s'agit de définir ces petites pales par leur situation, des lettres de référence sont utilisées. Par contre, lorsqu'il s'agit de les définir par leur mode d'exécution, elles sont désignées par des chiffres de référence. La raison de cette distinction est que n'importe quel type de petite pale peut être mis en oeuvre dans n'importe quelle situation.

Selon la réalisation de la fig. 4, des petites pales «a» sont formées sur le bord extérieur des disques 4.

Selon celle de la fig. 5, des petites pales «b» sont formées sur le bord intérieur des déflecteurs tronconiques 12.

Selon celle de la fig. 6, des petites pales «c» sont formées sur le bord intérieur d'une collerette annulaire plane 17 solidaire de chaque déflecteur 12 et prolongeant avec précision de disque 4 correspondant.

Suivant une deuxième forme de réalisation illustrée par les figs. 2 et 3, la fente 13 se trouve supprimée, chaque disque 4 est prolongé par une plage annulaire périphérique coplanaire 15 ou tronconique 16 délimitant avec la paroi de l'enceinte 1 la fente 14 et un rideau axial de fluide s'écoulant à contre-courant vers l'amont est engendré à travers celle-ci; à cet effet, des petites pales «d» sont formées à la périphérie de la plage 15 ou 16.

Toutes ces petites pales «a» à «d» sont orientées par rapport à l'élément qui tourne le plus rapidement (le support de ces pales ou le fluide) pour diriger le rideau de balayage vers l'amont, comme cela se produit dans un ventilateur axial.

Les petites pales peuvent être exécutées par tous moyens appropriés... Elle peuvent être parfaitement profilées si les déflecteurs fixes, voire les disques sont fabriqués par injection dans un moule d'une matière plastique, d'un alliage léger ou autre. Mais étant donné que la perfection de forme ne s'impose pas, qu'en outre les disques et les déflecteurs sont pratiquement toujours fabriqués en tôle, les modes d'exécution représentés sur les figs. 7 à 10 peuvent être mis en oeuvre.

Suivant le mode d'exécution de la fig. 7, une entaille 18 est pratiquée par sciage, découpage, cisaillage ou autre sur le bord de l'élément porteur des petites pales (disque ou déflecteur) et l'un des coins 19 est relevé en biais par pliage de long d'une ligne oblique 20. Ce coin triangulaire constitue une petite pale susceptible de refouler le fluide vers l'amont (flèche F1) lorsque l'élément porteur défile dans le sens de la flèche R par rapport à un fluide statique ou tournant moins vite ou lorsque le fluide s'écoule dans le sens inverse à celui de la flèche R par rapport à un élément porteur fixe.

Suivant le mode d'exécution de la fig. 8, l'entaille 18 permet de former deux coins en biais 19 et 21 ou petites pales, par pliage de long des lignes obliques 20 et 22 respectivement, de l'une vers l'aval et de l'autre vers l'amont.

Suivant le mode d'exécution de la fig. 9, une encoche d'équerre 23 est pratiquée sur le bord de l'élément porteur et la patte 24 sensiblement rectangulaire ainsi délimitée est relevée et inclinée par pliage le long de la ligne 25. Cette patte constitue une petite pale susceptible de refouler le fluide comme selon la fig. 7.

Suivant le mode d'exécution de la fig. 10, une ecoche en T 26 est pratiquée pour former deux pattes inclinées 24 et 27, par pliage le long des lignes 25 et 28 respectivement, de l'une vers l'aval et de l'autre vers l'amont.

Dans ces divers modes d'exécution, il est essentiel d'incliner les coins ou pattes formant pales par rapport à la direction axiale afin que l'élément qui en est porteur fonctionne dans leur zone correspondant à une fente à la manière d'un ventilateur axial.

Suivant une troisième forme de réalisation illustrée par les figs. 11 à 13, le dernier disque aval 4.n du rotor 3 (fig. 12) ou les deux derniers disques aval 4.n-1 et 4.n dudit rotor (fig. 11) sont équipés d'ailettes radiales 28. Celles-ci sont solidaires de la bordure annulaire extérieure 29 du ou des disques considérés qui entourent les ajourages 8. Elles font saillie sur la face amont et s'étendent du disque dont elles sont solidaires jusqu'au voisinage du disque précédent.

Si l'appareil est exempt de déflecteurs 12 (fig. 11), les disques 4 du rotor 3 s'étendent jusqu'au voisinage de la paroi de l'enceinte 1 pour délimiter la fente 14 jusqu'à proximité de laquelle lesdites ailettes 28 sont situées. Ces ailettes portées par la bordure 29 des disques 4.n et 4.n-1 se comportent comme un ventilateur radial et engendrent lorsque le rotor 3 tourne, un rideau radial de fluide qui s'achemine jusqu'à la paroi de l'enceinte. Pour que ce rideau soit dévié le long de la paroi de cette dernière vers l'amont et n'emprunte jamais la dernière fente aval 14, ladite paroi de l'enceinte 1 est solidaire d'une collerette 30 qui recouvre à faible distance la fente considérée afin de former un labyrinthe. Ce rideau d'abord radial, puis dévié axialement vers l'amont est chargé de la phase la plus dense à éliminer et entraîne celle-ci à travers les fentes 14 successive jusqu'à l'extrémité d'évacuation de l'appareil. Mais parvenue au-delà du premier disque amont, la phase la moins dense du rideau revient dans le courant central de l'appareil où elle se charge à nouveau de phase la plus dense. Parvenue près du ou des disques aval, cette phase le moins dense à nouveau chargée se constitue en rideau refoulé vers la périphérie du ventilateur radial 28 et le cycle recommence.

Si l'appareil comporte des déflecteurs tronconiques 12 (fig. 12) le dernier disque aval 4.n du rotor 3 est équipé d'ailettes radiales 28 pour former un ventilateur radial qui engendre alors un rideau radial de fluide. Dans ce cas, il faut aussi que le rideau radial soit dévié axialement vers l'amont, ce que facilite le déflecteur aval 12, mais faut-il encore que les fentes annulaires 13 et 14 ne constituent pas des passages privilégiés. Pour qu'au contraire ces fentes ne livrent aucun passage au rideau, elles sont masquées à la manière d'un labyrinthe par un prolongement conique 31 de la paroi de l'enceinte (pour la fente) 14 et par la collerette 30 de cette paroi (pour la fente 13). Quelle que soit la forme de réalisation envisagée, les ailettes 28 peuvent être radiales comme indiqué sur la partie A de la fig. 13 ou présenter un angle d'incidence par rapport au rayon comme indiqué sur la partie B de cette figure; ces ailettes peuvent être droites (parties A et B) ou incurvées (partie C).

Dans cette troisième forme de réalisation, l'appareil comporte à la fois des ailettes radiales 28 sur au moins le dernier disque aval 4.n du rotor 3 et des petites pales axiales a, b ou c sur certains au moins des disques 4 et des déflecteurs 12 lorsque ceux-ci sont présents. La combinaison d'ailettes radiales avec de petites pales axiales permet d'obtenir un effet de ventilation hélico-centrifuge, grâce à laquelle les fentes 13 et/ou 14 ne peuvent être traversées que par un rideau fluide mobile véhiculant la phase la plus dense vers l'amont.

## Revendications

1. Appareil pour la séparation centrifuge d'un mélange comprenant au moins une phase gazeuse, cet appareil comportant, dans une enceinte fixe (1), un équipage tournant constitué par un rotor de traitement (3) à disques ajourés (4) décalés angulairement de l'un à l'autre, en amont par un distributeur rotatif (5) et en aval par un ventilateur (7) avec interposition éventuelle d'un redresseur rotatif (6), le mélange à traiter s'écoulant de façon laminaire à travers les ajourages (8) des disques suivant des veines hélicoïdales vives séparées par les lames hélicoïdales mortes dans laquelle la phase non gazeuse à séparer s'achemine entre les disques jusqu'à la partie fixe de l'enceinte où elle est collectée et s'achemine vers l'amont, caractérisé en ce qu'il comporte des moyens (a, b, c, d, 28) annihilant partiellement au moins les fuites vers l'aval à travers la fente annulaire (13) nécessairement ménagée entre les disques (4) et la partie fixe (1 et/ou 12 de l'enceinte) pour permettre la rotation de l'équipage tournant et consistant en de petites pales axiales (a; b; c; d) formées à la périphérie de l'un au moins quelconque des éléments constitués par les disques (4) et la partie fixe (1 et/ou 12), de l'enceinte pour engendrer un rideau axial de fluide s'écoulant à contrecourant vers l'amont dans la fente annulaire (13 ou 14) précitée, le rideau imposant alors que le mélange soit traité en totalité et que la phase séparée la plus dense s'achemine vers l'amont le long de la paroi de l'enceinte.

2. Appareil selon la revendication 1, caractérisé en ce que la partie fixe précitée de l'enceinte étant constituée par la paroi même de cette enceinte (1), les petites pales (d) sont formées à la périphérie d'une plage annulaire (15) des disques (4) exempte d'ajourages (8) sur une largeur suffisante et orientées pour diriger le rideau de balayage vers l'amont.

3. Appareil selon la revendication 1, caractérisé en ce que, la partie fixe précitée de l'enceinte étant constituée par un empilage de déflecteurs tronconiques (12) dont le bord intérieur est situé rigoureusement en regard des disques (4), les petites pales (a) sont formées sur le bord des disques.

4. Appareil selon la revendication 1, caractérisé en ce que, la partie fixe précitée de l'enceinte étant constituée par un empilage de déflecteurs tronconiques (12) dont le bord intérieur est situé rigoureusement en regard des disques (4), les petites pales (b) sont formées sur ce bord des déflecteurs.

5. Appareil selon la revendication 4, caractérisé en ce que le corps tronconique des déflecteurs (12) est solidaire d'une collerette annulaire plane intérieure (17) prolongeant les disques (4) et dans laquelle les petites pales (c) sont formées.

6. Appareil selon l'une quelconque des revendications 1 à 5, caractérisé en ce que le moyen annihilant partiellement au moins les fuites consiste également en des ailettes (28) radiales (A) ou incidentes (B), droites (A, B) ou incurvées (C) faisant saillie sur la face amont de la plage annulaire périphérique (29) exempte d'ajourages d'au moins le dernier disque aval (4.n) du rotor, pour engendrer un rideau radial de fluide s'écoulant vers la paroi (1) de l'enceinte et en ce que les fentes annulaires (13; 14) sont barrées, au-dessus du dernier disque aval, par une collerette (30) solidaire de la paroi de l'enceinte, cette collerette formant labyrinthe et favorisant la déviation du rideau de balayage radial en un rideau de balayage axial le long de cette paroi.

**Patentansprüche**

1. Apparat zur zentrifugalen Trennung einer Mischung mit mindestens einer gasförmigen Phase, welcher Apparat in einem fixen Gehäuse (1) ein Drehwerk umfasst, bestehend aus einem Behandlungsrotor (3) mit winkelförmig versetzten, durchlöcherten Tellern (4), einem Rotationsverteiler (5) stromaufwärts und einem Ventilator (7), gegebenenfalls unter Zwischenschaltung eines Rotationsgleichrichters (6), stromabwärts, wobei die Behandlungsmischung laminar durch die Löcher (8) der Teller strömt, und zwischen entsprechend aktiven schraubenförmigen Strömen, die von inaktiven schraubenförmigen Schichten getrennt sind, worin sich die abzutrennende nichtgasförmige Phase zwischen den Tellern bis zum fixen Teil des Gehäuses fortbewegt, wo sie sich sammelt und stromaufwärts bewegt, dadurch gekennzeichnet, dass er Mittel (a, b, c, d, 28) zum zumindest teilweisen Vernichten der Leckverluste stromabwärts durch den ringförmigen Schlitz (13), der gezwungenermassen zwischen den Tellern (4) und dem fixen Teil (1 und/oder 12) des Gehäuses zum Ermöglichen der Rotation des Drehwerks vorgesehen ist, umfasst, welche aus kleinen axialen Schaufeln (a; b; c; d) bestehen, die zur Bildung eines axialen, im ringförmigen Schlitz (13 oder 14) im Gegenstrom stromaufwärts strömenden Fluidvorhangs am Umfang zumindest irgendeines der durch die Teller (4) und den fixen Teil (1 und/oder 12) des Gehäuses gebildeten Elemente ausgebildet sind, wobei sich der Vorhang bildet, wenn die Mischung zur Gänze behandelt werden soll und sich die dichtere abgetrennte Phase entlang der Wand des Gehäuses stromaufwärts bewegt.

2. Apparat nach Anspruch 1, dadurch gekennzeichnet, dass die kleinen Schaufeln (d) bei Bildung des fixen Teils des Gehäuses (1) durch die Gehäusewand selbst am Umfang eines ringförmigen Bereichs (15) der Teller (4), der über eine ausreichende Breite keine Löcher (8) aufweist, ausgebildet und so gerichtet sind, dass sie den Strömungsvorhang stromaufwärts lenken.

3. Apparat nach Anspruch 1, dadurch gekennzeichnet, dass bei Bildung des fixen Teils des Gehäuses durch ein Paket aus kegelstumpfförmigen Leitwerken (12), deren Innenränder sich exakt gegenüber den Tellern (4) befinden, die kleinen Schaufeln (a) an den Rändern der Teller ausgebildet sind.

4. Apparat nach Anspruch 1, dadurch gekennzeichnet, dass bei Bildung des fixen Teils des Gehäuses durch ein Paket aus kegelstumpfförmigen Leitwerken (12), deren Innenränder sich exakt gegenüber den Tellern (4) befinden, die kleinen Schaufeln (b) an diesen Rändern der Leitwerke ausgebildet sind.

5. Apparat nach Anspruch 4, dadurch gekennzeichnet, dass der kegelstumpfförmige Körper der Leitwerke (12) mit einem planen, ringförmigen Innenansatz (17) versehen ist, der die Teller (4) verlängert und in welchem die kleinen Schaufeln (c) ausgebildet sind.

6. Apparat nach einem der Ansprüche 1 bis 5, dadurch gekennzeichnet, dass das Mittel zum zumindest teilweisen Vernichten der Leckverluste auch aus radialen (A) oder abgewinkelten (B), geraden (A, B) oder gekrümmten (C) Flügeln (28) besteht, die an der stromaufwärtigen Seite des ringförmigen Umfangbereichs (29) ohne Löcher von zumindest dem letzten stromabwärts liegenden Teller (4n) des Rotors zur Bildung eines radialen, zur Wand (1) des Gehäuses strömenden Fluidvorhanges abstehen, und dass die ringförmigen Schlitze (13; 14) über dem letzten stromabwärts liegenden Teller durch einen mit der Wand des Gehäuses verbundenen Ansatz (30) versperrt sind, welcher Ansatz ein Labyrinth bildet und die Umleitung des radialen Strömungsvorhanges in einen axialen Strömungsvorhang entlang dieser Wand begünstigt.

## Claims

1. Apparatus for the centrifugal separation of a mixture containing at least a gaseous phase, said apparatus comprising, inside a fixed enclosure (1), a rotary assembly constituted by a treatment rotor (3) with apertured discs (4) angularly offset one with respect to the other, upstream by a rotary distributor (5) and downstream by a fan (7) with optional interposition of a rotary rectifier (6), the mixture to be treated flowing in laminar style through the apertures (8) of the discs in helical running streams separated by helical still layers, in which the non-gaseous phase to be separated moves on between the discs as far as the fixed part of the enclosure where it is picked up and moved upstream, characterized in that it comprises means (a, b, c, d, 28) to annihilate at least partly the downstream leaks through the annular opening (13) necessarily provided between the discs (4) and the fixed part (1 and/or 12) of the enclosure to allow the rotation of the rotary assembly and consisting in small axial blades (a; b; c; d) formed on the periphery of any one at least of the elements constituted by the discs (4) and by the fixed part (1 and/or 12) of the enclosure to generate an axial screen of fluid flowing backwards towards the upstream part through said annular opening (13 or 14), the screen then making it so that the mixture is entirely treated and that the separated heavy phase moves upstream along the wall of the enclosure.

2. Apparatus according to claim 1, characterized in that the said fixed part of the enclosure being constituted by the actual wall of said enclosure (1), the small vanes (d) are formed on the periphery of an area (15) of the discs (4) which is aperture-free over a large enough width and oriented so as to direct the sweeping screen upstream.

3. Apparatus according to claim 1, characterized in that the said fixed part of the enclosure being constituted by a stack of truncated deflector plates (12) whose inner edge is situated just opposite the discs (4), the small vanes (a) are formed on the edge of said discs.

4. Apparatus according to claim 1, characterized in that the said fixed part of the enclosure being constituted by a stack of truncated deflector plates (12) whose inner edge is situated just opposite the discs (4), the small vanes (b) are formed on the edge of said deflectors.

5. Apparatus according to claim 4, characterized in that the truncated body of the deflector plates (12) is fast with a flat annular internal flange (17) extending from the discs (4) and in which are formed the small vanes (c).

6. Apparatus according to claim 1, characterized in that the means to at least partly annihilate the leaks also consist in radial (2) or incident (B) blades (28) which are straight (A, B) or incurved (C) and project from the upstream face of the peripheral annular aperture-free area (29) of at least the last downstream disc (4.n) of the rotor, in order to generate a radial screen of fluid flowing towards the wall (1) of the enclosure, and in that the annular openings (13; 14) are barred above the last downstream disc, by a flange (30) integral with said enclosure wall, said flange forming labyrinth and helping to deviate the radial sweeping screen axially along said wall.

**FIG.1**

Fig. 2

Fig. 3

Fig. 4

Fig. 5

Fig. 6

Fig. 7

Fig. 8

Fig. 9

Fig. 10

9

0088657

Fig. 11

Fig. 12

Fig. 13

11